# EUROPEAN PATENT APPLICATION

(11) **EP 4 770 279 A1**
(43) Date of publication of application: **01.07.2026**
(21) Application number: 24223778.2
(22) Date of filing: 30.12.2024
(51) Int. Cl.: H05B 47/21, B60Q 1/14, B60Q 1/06, H05B 47/18

(54) **CIRCUIT ARRANGEMENT FOR CONTROLLING LIGHT SOURCES OF A VEHICLE LAMP AND VEHICLE LAMP**

(71) Applicant: OPmobility Lighting Germany GmbH, 80807 München (DE)
(72) Inventor: SVRCEK, Martin, 742 42 enov u Nového Jicína (CZ)
(74) Representative: LLR

(57) **Abstract**

Vehicle lamp and its circuit arrangement for controlling light sources of a vehicle lamp, comprising:
-a wire interface (1) connected to the vehicle data bus, i.e. the vehicle communication network allowing different electronic control units (ECUs) within the vehicle to exchange data,
-a power supply,
-light sources (3, 6, 8, 10), each controlled by a driver (2, 5, 7, 9) communicating with the vehicle via the data bus, providing main functions selected among: a low beam, a high beam, daytime running lights/position lights, front turn indicators,
-a LED matrix manager (4) connected to the data bus.

The LED matrix manager (4) manages at least one of the drivers and this driver managed by the LED matrix manager is connected to the data bus only via the LED matrix manager.

## Description

### Technical field

In the context of automotive lighting, the invention relates to circuit arrangements for operating light sources such as light emitting diodes (LEDs).

### Background art

CN107493622A discloses an LED matrix manager containing multiple electronic switching devices for controlling LEDs via a UART. This manager is positioned between a main controller and an LED array, enabling a "one-to-many" control model. This configuration allows the main controller to manage multiple LED particles through the matrix manager, significantly increasing the number of LEDs that can be controlled.

In this description, UART has the usual meaning of Universal Asynchronous Receiver-Transmitter.

### Technical problem

In the headlight context, the primary and almost exclusive role of the matrix manager is to control LED arrays. While the concept of a matrix manager could be extended to manage other components (such as cooling systems or actuators), such applications are either rare or theoretical in the realm of automotive headlights. This specialised focus is due to the dominance of LED technology in modern headlight systems and the precision of the matrix manager in controlling LEDs.

This, along with other new functional safety requirements, is becoming a challenging target as there is a lack of suitable ICs with these functionalities on the market. In addition, the available drivers that meet these requirements come at a higher cost. The usual requirements from car manufacturers are as follows.
- to control all main and signal functions via communication bus,
- to use an interface consisting of power supply line and communication bus,
- to comply with Functional Safety rating of critical or all functions,
- to avoid the use of micro-controllers (uC) or any software.

These requirements lead to an architecture where all the drivers must support a common communication interface and target functional safety rating. There are not many such drivers on the market and those that are available come at a high cost.

As all drivers in the traditional approach are connected to the same communication bus UART via CAN (Controller Area Network, a specific type of communication protocol or language that is commonly used in automotive systems, known for its ability to handle noise and interference, making it well-suited for the harsh environment of a car), this has the limitation that all drivers are from the same supplier. In the case of the required ASIL rating, each driver must meet the functional safety requirements (except from HB where functional safety is provided by the LED Matrix Manager). For additional LED failure detection capability, additional Matrix Managers are required.

In this description, "ASIL rated" refers to a classification within the Automotive Safety Integrity Level (ASIL) which is part of the ISO 26262 standard for automotive safety. An "ASIL B rated" component indicates that it meets the safety requirements deemed necessary to handle moderate risks. In practice, this means that the system has been designed and tested to perform reliably under certain predefined conditions, and it includes specific safety features that reduce the probability of failure that could lead to accidents. For example, in automotive applications, systems related to active safety features are classified as ASIL B, requiring robust design, fault tolerance, and failure mitigation strategies. According to the invention, "ASIL B rated" means "at least ASIL B rated", i.e. a higher ASIL rating, such as C or D, would also be considered as "ASIL B rated".

### Technical solution

One object of the invention is a **circuit arrangement** for controlling light sources of a vehicle lamp.

Said circuit arrangement comprises:
- a wire interface connected to the vehicle data bus, i.e. the vehicle communication network allowing different electronic control units (ECUs) within the vehicle to exchange data,
- a power supply,
- light sources, each controlled by a driver communicating with the vehicle via the data bus, preferably providing main functions selected among a low beam, a high beam, daytime running lights/position lights, front turn indicators,
- an LED matrix manager connected to the vehicle data bus.

The circuit arrangement is characterised in that the LED matrix manager manages at least one of the drivers and this driver managed by the LED matrix manager is connected to the vehicle data bus only via the LED matrix manager.

According to the invention, the LED matrix manager (with ASIL B rating) acts as a communication gateway between the vehicle data bus and the lamp's light sources.

Thanks to the invention, the LED matrix manager is positioned between a main controller and an LED function driver, allowing all HDLP (High-Density Light Projection) functions to be controlled using a simple and well-known matrix manager protocol.

The invention allows function activation and failure reporting of the lamp, all performed by the LED matrix manager.

By using standard drivers in combination with one or more LED matrix manager ICs acting as a communication hub, the cost of the lamp is significantly reduced. In particular, all the light source drivers could be QM rated without the need for a dedicated communication interface. The ASIL B rating could be achieved for all functions with the support of the matrix manager.

The invention can therefore bring significant savings in the realisation of uC-less HDLPs.

In addition, the solution allows the combination of drivers from different suppliers to be combined in a single HDLP.

The solution uses a simple communication protocol that OEMs are already familiar with.

A further advantage of the invention is to reduce the traffic on the vehicle data bus.

Also, thanks to the invention, discrete fault detection circuit can be used where needed. In other words, a dedicated electronic system designed to monitor a light source's performance and detect any malfunctions, such as an open circuit, a short circuit, or degraded functionality, can be connected to the matrix manager. Here, the term "discrete" indicates that the fault detection is implemented as a separate, stand-alone circuit, rather than being integrated into a central control module.

The invention allows for a wide selection of LED drivers. Indeed, the system is not tied to a specific driver or manufacturer, allowing designers to optimise for cost, performance, or availability when selecting the LED drivers.

Other advantages of the invention include:
- a reduced number of wires for controlling all HDLP functions,
- control of multiple functions with different requirements of power supply with one single vehicle interface protocol,
- UART drive can be used as communication interface, reducing the need to use micro-controllers in "High Definition Lighting Performance" (realisation of uC less HDLP) and still allowing control of all lamp functions with desired safety level,
- the matrix manager acts as the main communication interface, providing control of lamp functions without the need for separate wires to control HDLP functions,
- the matrix manager controls drivers that do not need to be compatible with the vehicle data bus, increasing the safety of such drivers.

According to a preferred embodiment, the matrix manager provides a failure detection for light sources.

According to a preferred embodiment, the matrix manager provides a function activation of the lamp.

According to a preferred embodiment, drivers from different suppliers and/or using different communication protocols are connected to the matrix manager.

A further object of the invention is a **vehicle lamp** comprising a circuit arrangement as described above.

### Brief description of drawings

The invention will be better understood upon reading the following description, provided only as an illustrative example. The terms "top", "bottom", "front" and "rear" refer to the directions once the vehicle lamp is installed on a vehicle oriented in its usual upright position. The following description is with reference to the attached drawings in which:
[Fig. 1] illustrates the architecture of a vehicle lamp according to the prior art.
[Fig. 2] shows the improvement of the invention according to a first embodiment.
[Fig. 3] shows details of the matrix manager and its connections.

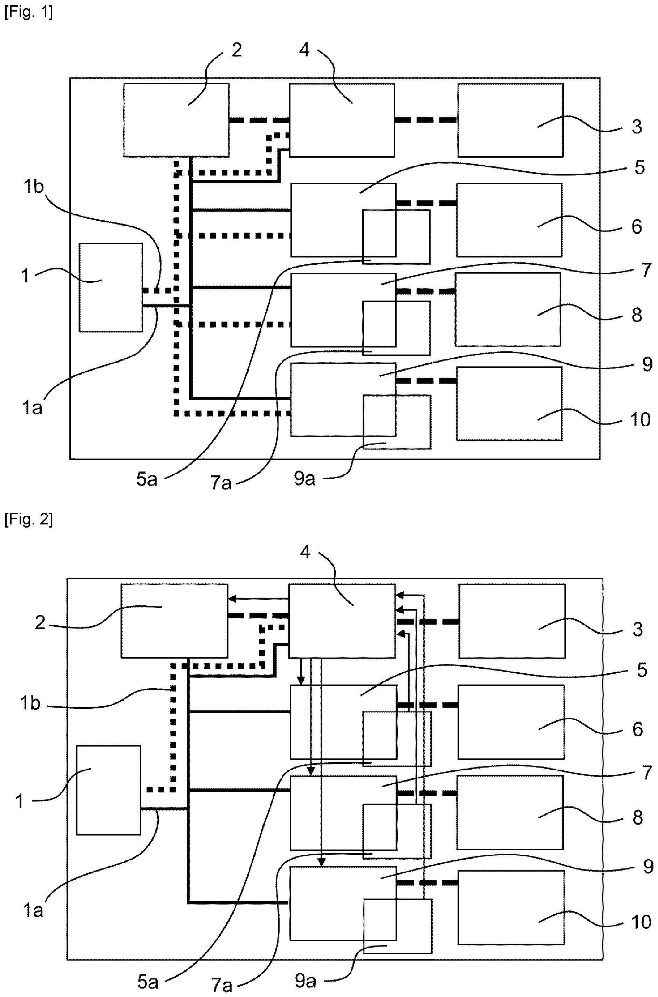

Fig. 1 is a diagram showing a circuit arrangement comprising:
- an interface 1,
- an LED driver 2 for high beam LEDs 3,
- a matrix manager 4 for the high beam LEDs 3,
- an LED driver 5 for low beam LEDs 6,
- an LED driver 7 for a front turn indicator LED 8,
- an LED driver 9 for daytime running lights/position lights LEDs 10.

The wired interface 1 uses two pairs of cables 1a, 1b: one pair 1a for the power supply, one pair 1b for the vehicle data bus, which embodies the controlled area network allowing the body control module to communicate with the drivers. The interface is connected to each driver 2, 5, 7, 9 and also to the matrix manager 4. Through this connection, the interface provides power and data communication between the vehicle data bus and the LEDs.

The four drivers 2, 5, 7, 9 are used to control the LEDs of the special lights. Each of these drivers has a UART interface. It is either QM rated or ASIL B rated. Matrix manager 4 has a UART interface.

The high beam LED driver 2 works in conjunction with the matrix manager 4 to control the matrix of high beam LEDs 3. The matrix manager 4 is ASIL B rated. It includes a high beam LED matrix failure detection.

Failure detection for the other drivers is performed by an optional matrix manager 5a, 7a, 9a for individual failure detection.

In the embodiment of Fig.2, the diagram is modified compared to the prior art.

The vehicle data bus 1b is now reduced to a single connection between the interface 1 and the matrix manager 4.

The matrix manager 4 communicates with each driver 2, 5, 7, 9 via a direct UART interface. None of these drivers is directly connected to the vehicle data bus 1b. As shown by the arrows, any communication between a driver 2, 5, 7, 9 and the data bus 1b goes through the matrix manager 4, which acts as a gateway.

Each driver 2, 5, 7, 9 still has its own failure detection function 5a, 7a, 9a. The outputs of these functions are also fed back to the matrix manager 4, as shown by the arrows.

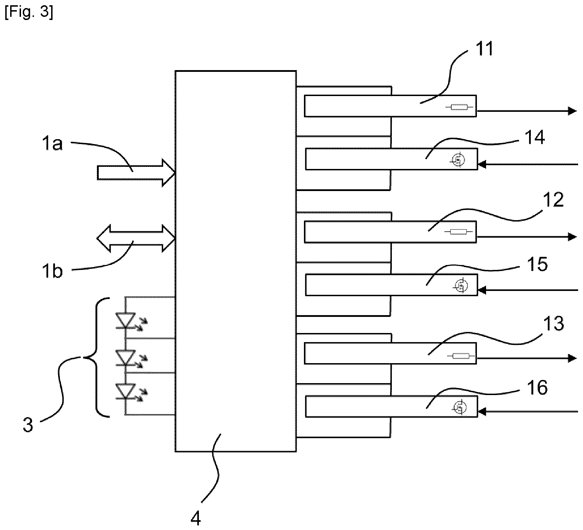

In Fig.3, one can see the details of the matrix manager 4. The matrix manager 4 receives power and data from the controller area network via the wired connection.

The matrix manager is connected to the LEDs 3 to perform the control of a matrix high beam LED, according to its primary function.

The matrix manager 4 is also connected to a series of pairs of control circuits 11, 12, 13 and diagnostic feedback circuits 14, 15, 16, which respectfully simulate a connected LED and a failed LED. Each such pair of circuits 11-14, 12-15, 13-16 is used for the low beam, the front turn indicator and the daytime running lights/position lights.

The advantage of using matrix manager 4 is to take advantage of the widespread use of matrix managers and their protocols, which in most cases are likely to be compatible with the body control module interface.

Other lighting functions or diagnostic functions 17 can also be performed by the matrix manager 4, as well as a levelling function 18, i.e. a function for controlling a system that adjusts the angle of the headlamps to ensure proper illumination of the road while preventing glare for other drivers.

In addition to providing cost savings by the use of well-known matrix managers instead of specific IC devices, the invention also secures the operation of the components of the lamp since the operation of said components is entirely controlled by the matrix manager without any possibility for the Body Control Module to improperly and erroneously activate any of the components of the lamp. In other words, by using the matrix manager as the only way to control the light sources of the lamp, as long as the settings of the matrix manager are correct, there is no possibility of using the lamp in a way that would not comply with legal requirements.

### List of references

1: interface
1a, 1b: pairs of cables
2: LED driver
3: high beam LEDs
4: matrix manager
5: LED driver
5a: failure detection function
6: low beam LEDs
7: LED driver
7a: failure detection function
8: front turn indicator LED
9: LED driver
9a: failure detection function
10: daytime running lights/position lights LEDs
11, 12, 13: control circuit
14, 15, 16: diagnostic feedback circuit
17: light functions or diagnosis functions
18: levelling function

## Claims

1. **Circuit arrangement** for controlling light sources (3, 6, 8, 10) of a vehicle lamp, comprising:
- a wire interface (1) connected to the vehicle data bus, i.e. the vehicle communication network allowing different electronic control units (ECUs) within the vehicle to exchange data,
- a power supply,
- light sources (3, 6, 8, 10), each controlled by a driver (2, 5, 7, 9) communicating with the vehicle via the data bus,
- an LED matrix manager (4) connected to the vehicle data bus,
**characterised in that** the LED matrix manager (4) manages at least one of the drivers (2, 5, 7, 9) and this driver managed by the LED matrix manager is connected to the vehicle data bus only via the LED matrix manager (4).

2. Circuit arrangement according to claim 1, wherein the matrix manager (4) provides a failure detection for light sources.

3. Circuit arrangement according to any one of the preceding claims, wherein the matrix manager (4) provides a function activation of the lamp.

4. Circuit arrangement according to any one of the preceding claims, wherein light sources (3, 6, 8, 10) provide main functions selected among: a low beam, a high beam, daytime running lights/position lights, front turn indicators

5. The circuit arrangement of claim 1, wherein the matrix manager reduces the traffic on the vehicle data bus.

6. Circuit arrangement according to any one of the preceding claims, wherein drivers (2, 5, 7, 9) from different suppliers are connected to the matrix manager.

7. Circuit arrangement according to any one of the preceding claims, wherein drivers (2, 5, 7, 9) using different communication protocols are connected to the matrix manager.

8. **Vehicle lamp** using a circuit arrangement according to any one of the preceding claims.
